# EUROPEAN PATENT SPECIFICATION

(11) **EP 1 106 044 B1**
(45) Date of publication and mention of the grant of the patent: **18.02.2009**
(21) Application number: 99830763.1
(22) Date of filing: 07.12.1999
(51) Int. Cl.: A01B 1/06, A01D 34/00

(54) **Portable handeled tool for use in farming and gardening works provided with an improved handle**
Handtraggerät für Garten oder Landwirtschaft mit verbessertem Griff
Outil à main portable pour l'agriculture ou le jardinage, avec poignée perfectionnée

(43) Date of publication of application: 13.06.2001
(73) Proprietor: Active S.r.l., 26037 S.Giovanni in Croce (CR) (IT)
(72) Inventor:
(74) Representative: Robba, Pierpaolo

(56) References cited:
- DE-B- 1 041 723
- FR-A- 2 663 582
- US-A- 2 697 457
- US-A- 4 282 652
- US-A- 4 286 675

## Description

The present invention relates to a portable handheld tool for use in farming and gardening works comprising a motor, two handles, and a driving rod carrying at one end a cutting tool driven by said motor.

Prior tools or devices of this type are for example the cord type mowers, the chain pruners, the hedge-trimmers and so on.

These portable handheld tools for use in farming and gardening works are equipped with an IC engine or an electric motor journalled at the opposite end of the cutting member which can be a cutting disc, a rotary cord cutter head, a reciprocating cutting implement, a bar equipped with a chain and so on.

In these machines it is further necessary to provide two handles for allowing the operator's control of the motor as well as the proper directing and positioning of the machine and of the cutting member.

For this purpose, between the motor and the cutting member there are located two handles that are fastened to or integral with the driving rod, respectively a first handle or main handle, to which the accelerator and stop controls of the motor are generally mounted, and a handle defined as secondary helping to support the machine and having generally an omega shape.

When using machines of the above discussed type, the operator may need to work along surfaces which are not parallel to the soil. For instance in a hedge-trimmer, the cutting member comprises two reciprocating blades, while in a chain pruner the cutting member comprises a bar and a chain. In both the cases, the cutting action can be easily performed in a given preferential plane, while it is difficult to be carried out in other planes.

In this connection, the existing tools or machines show remarkable limitations and/or drawbacks.

In fact, when the cut has to be performed parallely to the operator, i.e. vertically, the tool must be rotated by 90° and since both handles are integral with the rod, the gripping of the handles must be correspondingly rotated.

While for the secondary omega-shaped handle, the operator has no difficulty to slide his hand along the handle, for the main handle the new gripping results difficult, since the operator is compelled to rotate also his wrist to be able to push the gas lever. This way the body is compelled to assume unnatural postures, thus increasing the fatigue with the consequent higher risk of accidents and reducing the overall work rate.

US-A-5 815 928 discloses a portable lawn mower wherein the primary handle is integral with the motor and the driving rod can be rotated with respect to the handle and secured in a desired position through a lever which controls a coupling latch.

This solution has the drawback due to the fact that for rotating the rod the operator has to actuate the lever with one hand and therefore, first of all, the motion of the cutting member must be stopped, so that the motor runs idle. Moreover, the device requires a specially shaped handle, different from that usually employed in sundry machines.

Moreover such a system causes a remarkable loss of time when the cutting plane of the machine changes continuously, for example in a device with a "pruning" implement (such as a bar and a chain) used for cutting the branches of trees which are of course randomly arranged.

US-A-4 286 675 discloses a portable line trimmer comprising a driving attachment and a power handle assembly, including a housing containing the trimmer motor and provided with a rear handle carrying the motor controls. The power handle assembly is connected to the driving attachment through a quick connect coupling comprising a collar that is fixed throiugh a threaded engagement to the housing of the power handle assembly. In order to modify the rotational position of the power handle assembly relative to the drive shaft assembly it is necessary to loosen the collar of the quick connect coupling, i.e. the operation of the trimmer must be interrupted.

An object of the present invention is to eliminate the drawbacks of the known machines and to provide a portable handheld tool for use in farming and gardening works which is comfortable for the operator, and more particularly allows to carry out - without efforts or difficulties - the cut in differently oriented planes.

According to the invention, these objects are achieved through a tool as claimed in claim 1.

Further advantageous characteristics are recited in the dependent claims.

More particularly, a tool according to the invention allows the rotation of the main handle with respect to the axis of the driving rod.

Hereinafter, the invention will be illustrated with particular reference to a pruning chain-tool, nevertheless works, comprising a motor, a driving rod equipped with two handles and carrying a cutting tool that is driven by the motor (usually of i.c. type) and mounted at the end on the rod which is opposite to the one coupled to the motor.

In the following the invention will be illustrated with reference to the accompanying drawings showing preferred embodiments thereof that are nevertheless provided purely by way of non-limiting embodiments, in which:
Figure 1 is a perspective view illustrating a device according to the invention, in particular, a pruning chain tool;
Figure 2 is a perspective view illustrating with more details the tool of Figure 1;
Figures 2A and 2B show details of a hedge-trimmer and a cord type grass mower, in which the invention is advantageously applied;
Figure 3A is a partial perspective view of a primary handle;
Figure 3B is a partial sectional view of the handle of figure 3A;
Figure 4 illustrates an embodiment of a tool according to the invention;
Figure 5 illustrates a further embodiment of a tool according to the invention.

Throughout all the Figures the same reference numerals have been used to indicate similar or substantially corresponding parts.

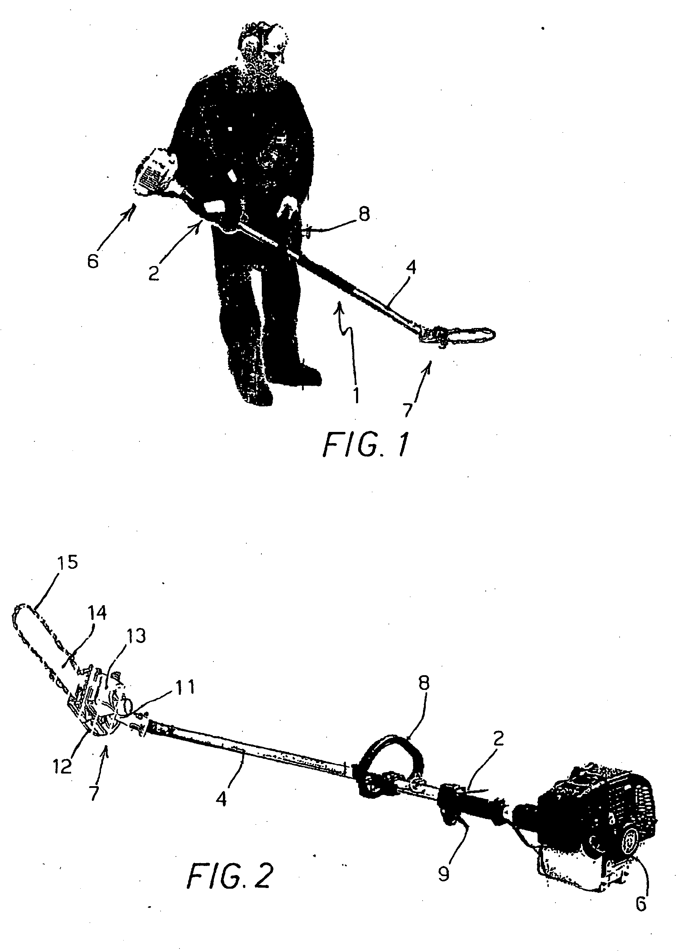

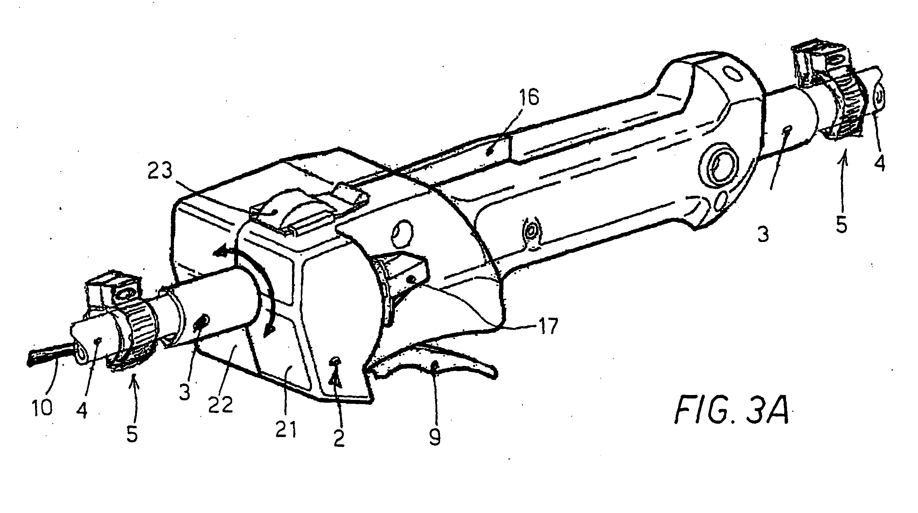

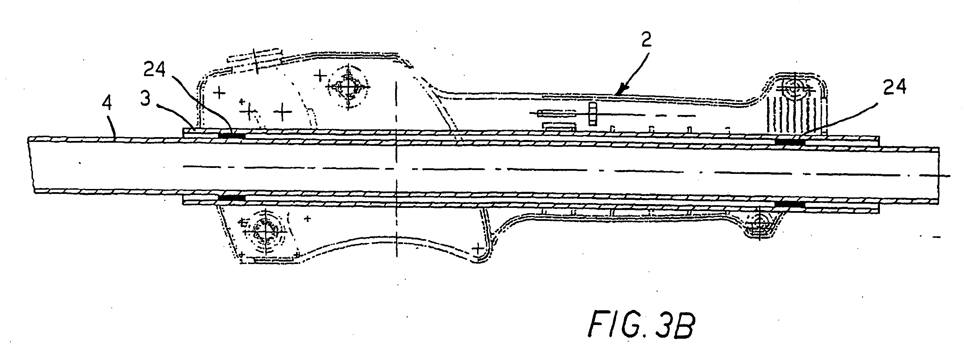

With reference to Figures 1 to 3, a pruning tool according to the invention and adapted for pruning tree branches, comprises a motor 6 connected to a tubular body or rod 4, inside which a driving shaft 10 (Fig. 3) is rotating, an end of such shaft being connected to the motor 6 while the other end is connected to a cutting member 7. In the illustrated case of a pruning device, the cutting member 7 comprises a bevel gear pair 11, a rod support 12, a tank 13 containing a lubricating oil for the chain, an oil pump (not shown in the Figures), a chain bar 14 and a cutting chain 15. To the rod 4 there are fitted two handles, respectively a main handle 2 also carrying the motor controls and a secondary omega-shaped handle 8 integral with the rod 4.

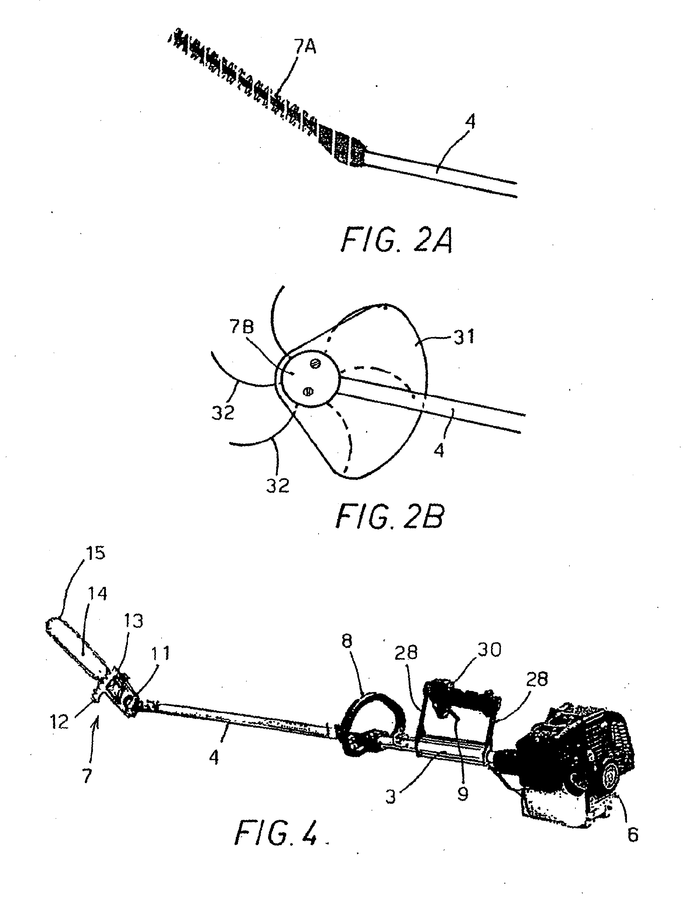

The driving shaft 10 rotates inside the (tubular) rod 4 and transmits the motion from the motor 6 to the cutting member 7. In the figures 2A and 2B there are shown an end tool 7A (comprising two reciprocating blades) and a tool 7B (a nylon cord head 32 with a gravel guard 31), of a hedge-trimmer and a grass mower, respectively.

As better illustrated in Figure 3, the main handle 2, preferably formed by two half-shells of plastic material 21 and 22, carries the motor controls such as a stop switch 23, a gas lever 9, a safety lever 16 and a half-gas lever 17.

According to the invention, the handle 2 is integral with a sleeve or support 3, preferably of cylindrical shape, which sleeve in turn can rotate about the rod 4 or more generally a direction parallel to the axis of rod 4.

Preferably, as schematically illustrated in the detail of Figure 3B, between the tube 3 and the rod 4 there are disposed bronze bushings or plastic shells 24, or in general low friction supporting means, to limit the wear and tear of the contacting surfaces.

On the rod 4 there are further provided two stop members 5 for preventing the accidental sliding of the handle along the rod 4.

In such a way, through the omega-shaped handle 8 the operator can easily rotate the rod 4 to change the cutting plane without modifying the position and the gripping of handle 2, and consequently without changing the hand position, and the actuation of controls 23, 9, 16, etc. is quite easy.

In the embodiment shown in Figure 4, the handle 30 is fastened to the sleeve 3 by two sections or arms 28 (with generally radial extension), and is not aligned with the rotating support 3, with the additional advantage of a centre of gravity lower than the handle 2.

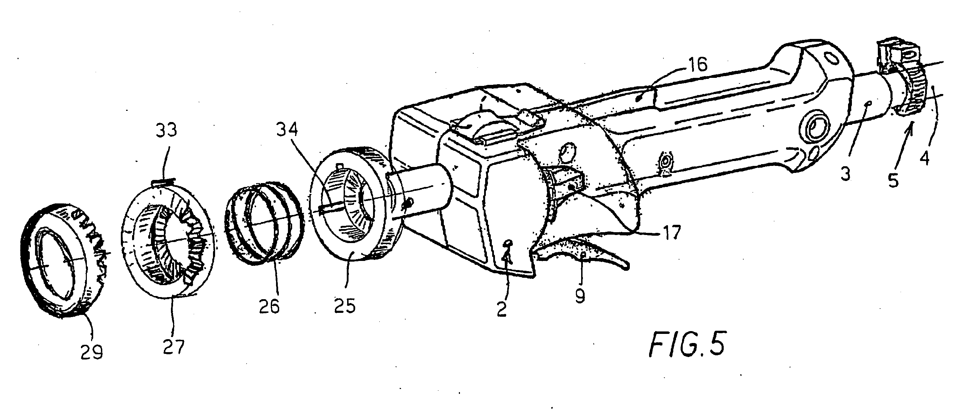

In the embodiment illustrated in Figure 5, the handle comprises two opposite coaxial crown gears, respectively indicated by 27 and 29. Both the crown gears have facing flat teeth which mesh with each other. The crown gear 29 is integral with the rod 4, while the crown gear 27 is inserted into a bushing or flange 25, together with a helical spring 26 to produce an axial thrust. Two or more peripheral ribs 33 are formed on the crown gear 27 for engaging corresponding axial grooves 34 on the inner surface of the bushing 25, so that the crown gear 27 is axially movable, but not rotatable, in respect of the bushing.

Thanks to the disclosed arrangement, the handle 2 can be rotated stepwise when the operator applies to the handle a predetermined torque causing an axial motion of the front teeth of gear 29 that allows the rotation of the handle to an adjacent meshing position. This way a better control of the machine is achieved under particular operating conditions, such as for example when the cutting plane remains constant for a long extension of space or for a certain period of time.

The invention has been illustrated with reference to preferred embodiments.

More particularly, in a pruning device the improved handle shall be located between the motor and the cutting member, on the driving rod. The modifications for other known machines to which a device according to the invention is applicable, such as for example cord type grass mowers, hedge-trimmers etc., have not been illustrated in detail, as they are evident to the skilled of the art.

## Claims

1. A portable handheld tool for use in farming and gardening works, comprising:
- a motor (6),
- a driving rod (4) carrying at one end a cutting tool (7) driven by said motor (6),
said rod (4) being further equipped with a main handle (2; 30) which carries the motor controls, and with a secondary handle (8),
**characterised in that** said main handle (2; 30) is rotatably associated to said driving rod (4) so that said main handle can be rotated with respect to a direction which is parallel to the axis of said driving rod (4) also during operation of said cutting tool (7).

2. A tool as claimed in claim 1, **characterised in that** it comprises means (25, 26, 27, 29) to lock said main handle (2) at a plurality of predetermined angular positions.

3. A tool as claimed in claim 1 or 2, **characterised in that** said main handle (2) is integral with a sleeve or support (3), which in his turn can rotate around said driving rod (4).

4. A tool as claimed in claim 2, **characterised in that** between said sleeve (3) and said rod (4) there are disposed supporting means such as bronze bushings or plastic shells (24) to limit the wear of the contacting surfaces.

5. A tool as claimed in claim 2 or 3, **characterised in that** stop members (5) are provided on said sleeve (3) for limiting the axial sliding of said handle (2).

6. A tool as claimed in the preceding claims, **characterised in that** said main handle (30) is fastened to said sleeve (3) through two arms (28) with generally radial extension.

7. A tool as claimed in claim 2, **characterised in that** said locking means comprise two opposite coaxial crown gears (27, 29), the first one (29) of said crown gears being integral with said driving rod (4), while the second one (27) is axially, slidable within a bushing (25).

8. A tool as claimed in claim 7, **characterised in that** said locking means further comprises a helical spring (26) for applying an axial thrust onto said second crown gear (27), and one or more peripheral ribs on said second crown gear (27) to be engaged by corresponding axial grooves (34) formed on the inner surface of said bushing (25).

9. A tool as claimed in the preceding claims, **characterised in that** said tool is a chain pruning device.

10. A tool as claimed in the preceding claims, **characterised in that** said tool is a hedge-trimmer.

## Patentansprüche

1. Handtraggerät für Garten und Landwirtschaft, mit
- einem Motor (6),
- einer Antriebsstange (4), die am einen Ende ein vom Motor (6) angetriebenes Schneidwerkzeug (7) trägt,
wobei die Stange (4) außerdem mit einem Hauptgriff (2;30), der die Motorsteuerung trägt, sowie einem sekundären Griff (8) versehen ist,
**dadurch gekennzeichnet, dass** der Hauptgriff (2;30) drehbar mit der Antriebsstange (4) verbunden ist, so dass der Hauptgriff in Bezug auf einer zur Achse der Antriebsstange (4) parallele Richtung auch während des Betriebs des Schneidwerkzeugs (7) drehbar ist.

2. Gerät nach Anspruch 1,
**dadurch gekennzeichnet, dass** es Elemente (25, 26, 27, 29) zum Verriegeln des Hauptgriffs (2) in einer Vielzahl von festgelegten Winkellagen aufweist.

3. Gerät nach Anspruch 1 oder 2,
**dadurch gekennzeichnet, dass** der Hauptgriff (2) einstückig mit einer Büchse oder einer Abstützung (3) verbunden ist, die um die Antriebsstange (4) drehbar ist.

4. Gerät nach Anspruch 2,
**dadurch gekennzeichnet, dass** zwischen der Büchse (3) und der Stange (4) Lagerelemente wie Bronzebüchsen oder Plastikschalen (24) angeordnet sind, um den Verschleiß der Kontaktflächen zu begrenzen.

5. Gerät nach Anspruch 2 oder 3,
**dadurch gekennzeichnet, dass** Anschlagelemente (5) auf der Büchse (3) vorgesehen sind, um ein axiales Verschieben des Griffes (2) zu begrenzen

6. Gerät nach den vorhergehenden Ansprüchen,
**dadurch gekennzeichnet, dass** der Hauptgriff (30) an der Büchse (3) über zwei Arme (28) befestigt ist, die im Wesentlichen radial verlaufen

7. Gerät nach Anspruch 2,
**dadurch gekennzeichnet, dass** die Verriegelungselemente zwei einander gegenüberliegende koaxiale Kronenzahnräder (27, 29) aufweisen,
wobei das erste Kronenzahnrad (29) einstückig mit der Antriebsstange (4) ausgebildet ist, während das zweite Zahnrad (27) in einer Büchse (25) axial verschiebbar ist.

8. Gerät nach Anspruch 7,
**dadurch gekennzeichnet, dass** die Verriegelungselemente ferner eine Schraubenfeder (26) aufweisen, um auf das zweite Kronenzahnrad (27) einen axialen Druck auszuüben, und dass das zweite Kronenzahnrad (27), eine oder mehrere Umfangsrippen hat, die mit entsprechenden, an der Innenseite der Büchse (25) vorgesehenen axial verlaufenden Nuten (34) in Eingriff bringbar sind.

9. Gerät nach den vorhergehenden Ansprüchen,
**dadurch gekennzeichnet, dass** das Gerät eine Entastungseinrichtung ist.

10. Gerät nach den vorhergehenden Ansprüchen,
**dadurch gekennzeichnet, dass** das Gerät eine Heckenschere ist.

## Revendications

1. Outil à main portable à utiliser pour l'agriculture et le jardinage, comportant :
- un moteur (6),
- une tige d'entraînement (4) portant au niveau d'une extrémité un outil de coupe (7), commandé par ledit moteur (6),
ladite tige (4) étant, de plus, munie d'une poignée principale (2 ;30) qui supporte les commandes du moteur, et d'une poignée secondaire (8),
**caractérisé en ce que** ladite poignée principale (2 ;30) est associée à rotation à ladite tige d'entraînement (4) de façon que ladite poignée principale puisse tourner par rapport à une direction qui est parallèle à l'axe de ladite tige d'entraînement (4) également pendant un fonctionnement dudit outil de coupe (7).

2. Outil selon la revendication 1, **caractérisé en ce qu'**il comporte des moyens (25, 26, 27, 29) pour bloquer ladite poignée principale (2) au niveau d'une pluralité de positions angulaires prédéterminées.

3. Outil selon la revendication 1 ou 2, **caractérisé en ce que** ladite poignée principale (2) est solidaire d'un manchon ou d'un support (3), lequel à son tour peut tourner autour de ladite tige d'entraînement (4).

4. Outil selon la revendication 2, **caractérisé en ce qu'**entre ledit manchon (3) et ladite tige (4), se trouvent disposés des moyens de support tels que des bagues de bronze ou des coques de plastique (24) pour limiter l'usure des surfaces de contact.

5. Outil selon la revendication 2 ou 3, **caractérisé en ce que** des éléments d'arrêt (5) sont prévus sur ledit manchon (3) pour limiter le coulissement axial de ladite poignée (2).

6. Outil selon les revendications précédentes, **caractérisé en ce que** ladite poignée principale (30) est fixée audit manchon (3) par l'intermédiaire de deux bras (28) présentant une extension généralement radiale.

7. Outil selon la revendication 2, **caractérisé en ce que** lesdits moyens de blocage comprennent deux couronnes à denture extérieure coaxiales opposées (27, 29), la première (29) desdites dentures extérieures étant solidaire de ladite tige d'entraînement (4), tandis que la seconde (27) peut coulisser axialement à l'intérieur d'une bague (25).

8. Outil selon la revendication 7, **caractérisé en ce que** lesdits moyens de blocage comprennent, de plus, un ressort hélicoïdal (26) pour appliquer une poussée axiale sur ladite seconde couronne à denture extérieure (27), et une ou plusieurs nervure(s) périphérique(s) sur ladite seconde denture extérieure (27) en vue d'être engagée(s) par des rainures axiales correspondantes (34) formées sur la surface interne de ladite bague (25).

9. Outil selon les revendications précédentes, **caractérisé en ce que** ledit outil est un dispositif d'ébranchage à chaîne.

10. Outil selon les revendications précédentes, **caractérisé en ce que** ledit outil est un outil pour tailler des haies.
